# FASCICULE DE BREVET EUROPEEN

(11) **EP 0 822 099 B1**
(45) Date de publication et mention de la délivrance du brevet: **22.03.2000**
(21) Numéro de dépôt: 97112315.3
(22) Date de dépôt: 18.07.1997
(51) Int. Cl.: B44C 1/17, B44C 1/16, B60C 13/00, B29D 30/72

(54) **Décalcomanie pour pneumatique vulcanisé et méthode d'obtention d'un pneumatique comportant un motif coloré**
Abziehbild für vulkanisierte Reifen und Verfahren zur Herstellung von einem Muster aufweisenden Reifen
Decal for vulcanised tyre and method for making a tyre bearing a coloured motif

(30) Priorité: 31.07.1996 FR 9609772
(43) Date de publication de la demande: 04.02.1998
(73) Titulaire: COMPAGNIE GENERALE DES ETABLISSEMENTS MICHELIN - MICHELIN & CIE, 63040 Clermont-Ferrand Cédex (FR)
(72) Inventeur: Boissonnet, Monique, 63100 Clermont-Ferrand (FR); Tatraux-Paro, Jean-Michel, 63000 Clermont-Ferrand (FR)
(74) Mandataire: Devaux, Edmond-Yves

(56) Documents cités:
- EP-A- 0 604 819
- EP-A- 0 701 913
- US-A- 5 300 164
- US-A- 5 315 764
- US-A- 5 494 726

## Description

L'invention concerne les décalcomanies comportant un motif coloré ainsi qu'une méthode d'obtention d'un pneumatique en caoutchouc vulcanisé comportant un motif coloré sur l'une de ses surfaces extérieures.

L'intérêt que porte la clientèle à l'aspect esthétique des objets qu'elle est susceptible d'acquérir va en augmentant; en effet, il est bien connu qu'un objet qui comporte de manière apparente des décorations, et qui plus est des décorations de couleurs variées, présente un attrait supplémentaire. En outre, et comme c'est le cas dans l'industrie du pneumatique, les normes en vigueur imposent un nombre croissant de marquages sur les flancs des pneumatiques : il apparaît donc comme particulièrement utile de pouvoir différencier certains de ces marquages par rapport à d'autres et l'un des moyens pour y parvenir consiste à déposer, sur la surface extérieure d'un pneumatique, au moins une encre de couleur adaptée suivant un motif correspondant au marquage désiré.

Il est connu, par exemple par le brevet US 2,188,866, que l'on peut employer une décalcomanie comportant un motif coloré pour décorer la surface extérieure d'un objet en caoutchouc vulcanisé comme par exemple un pneumatique vulcanisé. Dans le document US 2,188,866, il est divulgué une décalcomanie comportant un support temporaire sur lequel a été déposé, selon un motif prédéterminé, au moins une encre de couleur suivant une épaisseur relativement faible devant l'épaisseur du support. Cette encre est formulée de façon à pouvoir être transférée sur l'objet à décorer sous des conditions de pression et de température appropriées pour obtenir une bonne adhésion sur un mélange caoutchouc préalablement vulcanisé tout en demeurant suffisamment élastique après transfert. Par élastique, on entend que l'encre transférée est suffisamment déformable pour pouvoir suivre les déformations de la surface de l'objet sur laquelle elle a été transférée pendant l'utilisation ultérieure dudit objet.

L'une des difficultés rencontrées dans le développement et la mise en oeuvre d'une telle méthode pour décorer des objets comme les pneumatiques réside dans le fait qu'il est délicat de positionner avec précision la décalcomanie sur ledit pneumatique avant d'effectuer le transfert du motif; cette difficulté est liée à la géométrie de la surface sur laquelle cette décalcomanie est posée et à l'état de surface de ladite surface (stries, creux, bosses, état plus ou moins glissant, etc.). Or, on conçoit aisément qu'il soit impératif de positionner correctement la décalcomanie de façon qu'après transfert de l'encre du motif sur le pneumatique ledit motif se trouve dans une position choisie au préalable; cette mise en place correcte nécessite un temps relativement long d'ajustement, ce qui limite, d'un point de vue industriel, l'emploi d'une décalcomanie pour réaliser une décoration sur un pneumatique vulcanisé.

De plus, il peut arriver que le motif, même bien positionné sur le pneumatique à décorer, ne soit pas correctement orienté par rapport au pneumatique lui-même; c'est ce qui peut se produire dans le cas où l'on souhaite repérer, à l'aide d'une flèche, une direction privilégiée d'un pneumatique pourvu d'une sculpture conférant audit pneumatique un sens de rotation préférentiel. Ce constat conduit à prévoir des opérations supplémentaires de vérification après la mise en place d'un motif par thermo-transfert; ces opérations de vérification sont bien sûr coûteuses et ne sont pas sans conséquence sur le prix final du produit recouvert par un motif.

Il faut ajouter que les défauts de positionnement et/ou d'orientation d'un motif sont tout particulièrement visibles puisque ledit motif est en général d'une couleur différente de celle du pneumatique. La présence de ces défauts oblige dans la majorité des cas à intervenir après le transfert du motif pour éliminer ledit motif, ce qui ne peut pas se faire aisément (l'encre ayant été formulée pour bien adhérer au caoutchouc) et nécessite un outillage adapté; malgré tout, l'opération reste toutefois délicate et risque de laisser des traces sur le pneumatique.

Pour réduire les défauts de positionnement d'une décalcomanie, il est possible d'employer des systèmes complexes mettant en jeu des repérages lumineux, un opérateur devant placer manuellement la décalcomanie au bon endroit et avec la bonne orientation en se guidant sur les repères lumineux créés à la surface du pneumatique; une alternative consiste à prévoir un dispositif qui aurait la fonction de venir déposer au bon endroit la décalcomanie. Les inconvénients liés à ces systèmes sont d'ordre financier puisqu'il est nécessaire d'investir dans des machines coûteuses (et en nombre suffisant).

La décalcomanie et le procédé d'obtention d'un pneumatique comportant un motif coloré selon l'invention sont conçus de manière à résoudre les problèmes et à éliminer les inconvénients qui viennent d'être mentionnés.

Le procédé selon l'invention permet d'obtenir un pneumatique ou tout objet en caoutchouc vulcanisé à la surface duquel est appliquée une décalcomanie dont le positionnement est aussi correct que possible et ne nécessite qu'un dispositif effectuant le transfert du motif encré.

Il est proposé un procédé d'obtention d'un objet en caoutchouc pourvu d'au moins un motif coloré déposé par thermo-transfert à partir d'une décalcomanie sur ledit objet moulé et vulcanisé. Le procédé selon l'invention est caractérisé en ce qu'il comprend les étapes suivantes :
- on moule et on vulcanise ledit objet de façon qu'à sa surface et près de l'endroit où doit être déposé le motif coloré il y ait au moins un élément de relief faisant légèrement saillie sur ladite surface,
- on réalise, de manière connue en soi, une décalcomanie par dépôt d'au moins une encre colorée et vulcanisable selon un motif prédéterminé sur un support mince,
- on réalise, dans le support de la décalcomanie, des découpes, en nombre au moins égal au nombre d'éléments de relief sur l'objet, lesdites découpes étant adaptées à la géométrie et à la disposition des éléments de relief,
- on place la décalcomanie sur l'objet de manière que les éléments de relief à la surface de l'objet soient introduits dans les parties découpées du support de la décalcomanie de façon à maintenir la décalcomanie dans la bonne position avant la phase de pressage et de transfert du motif sur l'objet. Enfin, on procède au thermo-transfert de l'encre du motif sur la surface de l'objet.

On désigne par thermo-transfert le procédé permettant de transférer, sur la surface d'un objet en caoutchouc vulcanisé, un motif encré préalablement formé sur un support et consistant, après avoir mis en contact l'encre du motif avec ladite surface, à exercer une pression sur le support tout en apportant suffisamment de calories pour obtenir le transfert du motif sur ladite surface. Les pressions et les températures employées dans un tel procédé sont comprises respectivement entre 0.2 et 8 bars et 100°C et 300°C.

Bien sûr, un tel procédé est parfaitement adapté au transfert d'une décalcomanie sur un pneumatique moulé et vulcanisé comportant à la surface extérieure d'au moins un de ses flancs, des éléments de relief disposés de manière à venir s'emboîter dans les découpes réalisées dans le support de la décalcomanie, lesdits éléments ayant été réalisés pendant le moulage du pneumatique.

Les découpes réalisées sur une décalcomanie sont dites avoir des formes adaptées à la géométrie et à la disposition des éléments de relief qui lui correspondent dès lors qu'une fois en place, les possibilités de mouvement relatif entre la décalcomanie et les éléments de relief sont les plus réduites possible de manière à assurer un bon centrage de la décalcomanie. Cette caractéristique peut être atteinte par au moins une découpe dont la géométrie s'adapte sensiblement à la géométrie de l'élément de relief qu'elle entoure de façon que les bords de la découpe soient en contact au moins partiellement avec les parois dudit élément de relief, ou par une disposition judicieuse des découpes et des éléments de relief, ou encore par une combinaison des deux dispositions précédentes, ceci pour limiter les mouvements relatifs entre le support de la décalcomanie et la surface de l'objet à décorer dès lors que la décalcomanie est mise en place.

Selon l'invention, il est proposé une décalcomanie destinée à être appliquée contre la surface d'un objet en caoutchouc vulcanisé, ladite décalcomanie comportant une feuille mince servant de support temporaire et réalisée en matériau adapté pour recevoir une ou des encres de couleur vulcanisables à chaud et formulées pour adhérer davantage au caoutchouc vulcanisé qu'au support après vulcanisation de ladite ou lesdites encre(s). Cette décalcomanie comportant au moins un motif coloré réalisé avec au moins une encre vulcanisable et un support présentant au moins une découpe, en dehors de la surface dudit motif est caractérisée en ce que chaque découpe a une forme adaptée pour permettre l'emboîtage d'au moins un élément en relief faisant saillie sur la surface d'un objet à l'emplacement choisi pour placer le motif coloré. Les bords de la (ou des) découpe(s) sont en contact au moins partiellement avec les parois latérales des éléments de relief de manière à centrer le support de la décalcomanie et à limiter, une fois en place, les possibilités de mouvement dudit support par rapport à l'objet.

Les éléments de relief destinés à s'emboîter dans les découpes d'une décalcomanie sont réalisés au moment du moulage dudit objet et présentent des parois latérales ayant une hauteur relative, mesurée par rapport à la surface de l'objet à décorer, qui est suffisante pour maintenir la décalcomanie dans la position voulue sans toutefois empêcher son application sur l'objet pour réaliser le transfert du motif; cette hauteur est, par exemple, au moins égale à une fois l'épaisseur de la feuille formant le support de la décalcomanie.

Par support temporaire, on entend un support réalisé sous forme d'une feuille mince adaptée pour recevoir au moins une encre de couleur pour réaliser un motif, ledit support étant éliminé après l'opération de transfert de l'encre sur l'objet en caoutchouc vulcanisé.

La décalcomanie selon l'invention peut être réalisée par sérigraphie et différents types de support peuvent être employés, comme par exemple le polyéthéréphtalate d'éthylène (PET), l'aluminium ou le Mylar.

Préférentiellement, on choisit, pour réaliser le support d'une décalcomanie, un matériau pouvant se mettre sous forme de feuille mince et dont le domaine des températures de moulage s'étend entre 100°C et 250°C de façon à ce que ledit support puisse suivre et adopter, dans ses moindres détails, la géométrie de la surface de l'objet sur laquelle la décalcomanie est placée.

Les découpes peuvent être réalisées dans le support avant dépôt du motif encré sur ledit support ou bien après.

L'invention présente aussi l'avantage qu'il n'est pas indispensable d'employer un support transparent pour effectuer une vérification du motif puisqu'il est prévu des découpes qui assurent un bon placement de la décalcomanie sur la surface du pneumatique à décorer.

Dans le cas d'un pneumatique, le procédé selon l'invention permet de manière aisée et précise de renouveler le marquage en cours de vie dudit pneumatique si le besoin s'en fait sentir ou bien, en cas d'effacement total d'un premier motif; il est aussi possible de déposer un nouveau motif totalement différent mais utilisant les mêmes éléments de relief sur le pneumatique.

Cette décalcomanie et la méthode d'obtention d'un pneumatique comportant un motif coloré transféré par thermo-transfert offrent l'avantage de pouvoir être employées dans n'importe quel site industriel et commercial disposant d'un équipement limité à un moyen permettant d'appliquer une pression et de chauffer ladite décalcomanie pour réaliser le thermo-transfert dudit motif sur la surface extérieure d'un pneumatique vulcanisé.

De manière avantageuse, il peut être prévu de réaliser des découpes selon une répartition appropriée sur le support de la décalcomanie, ainsi que des éléments de relief à la surface du pneumatique à décorer selon une répartition identique de telle façon qu'il n'existe qu'une façon possible pour emboîter lesdits éléments de relief dans lesdites découpes et donc une seule position possible de la décalcomanie.

Dans le cas d'un pneumatique, les éléments de relief sur les flancs dudit pneumatique servant à placer la décalcomanie jouent aussi un rôle de protecteur du motif encré vis à vis des râpages et frottements du pneumatique contre des objets divers (trottoir, ...).

Les figures présentées maintenant ont pour objectif de faciliter la compréhension de l'invention et ne sauraient être considérées comme limitatives.

La figure 1 représente schématiquement la phase de mise en place d'une décalcomanie selon l'invention sur la surface externe de l'un des flancs d'un pneumatique.

La figure 2 montre la surface du pneumatique de la figure 1 après thermo-transfert d'un motif encré.

La figure 3 montre une autre variante de décalcomanie comportant des découpes sous forme d'encoches situées sur les bords de la décalcomanie.

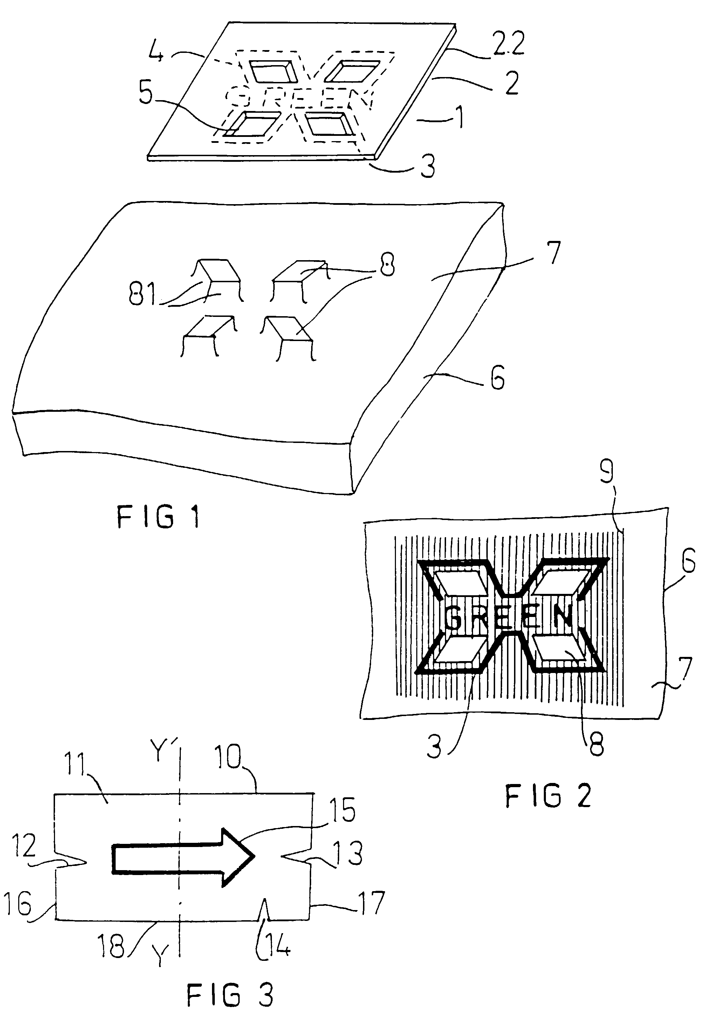

La figure 1 représente une vue partielle de la surface externe 7 d'un pneumatique 6 en caoutchouc vulcanisé sur laquelle on vient appliquer une décalcomanie 1 composée d'une feuille 22 formant un support mince 2 sur lequel a été préalablement déposée par sérigraphie une encre de couleur 3 selon un motif prédéterminé (ici la lettre "X" et le mot "GREEN" sont représentés en traits pointillés pour signifier qu'ils sont visibles par transparence).

Le support 2 de la décalcomanie 1 est réalisé en acétate de cellulose et a une épaisseur de 0.05 mm; sur l'une des faces dudit support a été déposée par sérigraphie une encre de couleur verte pour former le motif désiré.

L'encre 3 employée est formulée à partir d'une base élastomérique à laquelle est ajouté un pigment de couleur. Cette encre a été déposée sur le support en une faible épaisseur, comprise entre 0.003 et 0.025 mm; en outre, elle présente la caractéristique d'être vulcanisable à chaud et d'adhérer davantage au caoutchouc du pneumatique vulcanisé qu'au support 2 par thermo-transfert et de rester élastique après vulcanisation.

De manière générale, les pigments utilisés peuvent être choisis dans une gamme de couleur suffisamment étendue pour accroître la lisibilité du motif sur des surfaces noires, blanches ou de toute autre couleur employée dans l'industrie du caoutchouc et plus particulièrement dans l'industrie du pneumatique.

La surface 7 du pneumatique 6 est pourvue de quatre éléments de relief 8, chaque élément ayant une section transversale, prise parallèlement à la surface 7 du pneumatique dont la forme est proche de celle d'un losange; ces éléments présentent des parois latérales 81 qui sont dans le cas présent sensiblement perpendiculaires à la surface 7 du pneumatique 6 et dont la hauteur mesurée par rapport à la surface du pneumatique est de l'ordre de 0.5 mm. Le support 2 de la décalcomanie 1 comporte quatre découpes 5 en forme de losange et traversant ledit support, chaque découpe ayant une aire légèrement plus grande que l'aire de la section transversale des éléments de relief 8. Les découpes 5 sont disposées de manière à s'intégrer au motif choisi : dans le cas présent, chaque découpe est placée dans une branche du motif "X".

La suite des opérations consiste à mettre en place la décalcomanie 1 de façon à ce que les éléments de relief 8 à la surface 7 du pneumatique 6 s'emboîtent dans les découpes 5, les parois latérales des éléments de relief 8 étant en contact avec les bords des découpes, et ensuite à venir exercer une pression sur la décalcomanie contre la surface 7 avant de vulcaniser et transférer l'encre 3 du motif sur ladite surface et enfin retirer le support 2 de la surface 7 et ainsi obtenir un pneumatique 6 décoré avec un motif coloré comme cela est représenté schématiquement sur la figure 2.

De plus et de manière avantageuse, il a été prévu un ensemble de fines stries parallèles 9 formant un relief de 0.25 mm de haut à la surface du pneumatique et au voisinage des éléments de reliefs 8 servant de guides à la pose de la décalcomanie; ces fines stries 9 sur et dans lesquelles l'encre 3 du motif est déposée complètent la protection contre l'usure par frottement de la fine épaisseur d'encre 3 déposée. Le support 2 de la décalcomanie réalisé, dans le cas présent, en acétate de cellulose est particulièrement intéressant puisque, compte tenu de l'étendue de son domaine de températures de ramollissement permettant le moulage, il acquiert, sous l'action de la chaleur, une souplesse facilitant le dépôt de l'encre du motif sur et dans le relief formé par les fines stries parallèles 9.

Le procédé d'obtention d'un pneumatique comportant un motif coloré à partir d'une décalcomanie conforme à l'invention permet d'éliminer toute opération de vérification du bon positionnement que ce soit de la décalcomanie avant transfert ou du motif après transfert, ce qui se traduit par un gain sur le plan économique.

Sur la figure 3 est représentée une décalcomanie 10 dont le support 11 est réalisé dans un matériau présentant la caractéristique de se contracter de manière significative pendant la phase thermique du thermo-transfert. Il a été constaté que si l'on réalisait des découpes sous la forme de trous dans le support de ladite décalcomanie comme cela vient d'être décrit, il pouvait se produire un blocage de la contraction du matériau du support dans la direction définie par les éléments de relief sur le pneumatique pris deux à deux. Ce blocage de la contraction selon certaines directions est équivalent à une contraction non uniforme du support et conduit à une modification du motif encré disposé sur le support par déformation plus ou moins prononcée; cette altération du motif peut être considérée comme gênante d'un point de vue esthétique. Pour éliminer cet inconvénient tout en conservant l'avantage d'un positionnement aisé d'une décalcomanie à la surface d'un pneumatique vulcanisé, il est judicieux de réaliser sur le support de ladite décalcomanie des découpes sous la forme de lumières ou d'encoches débouchant sur les bords dudit support. De cette façon, la contraction du support étant identique quelque soit la direction considérée, le motif encré subit simplement une réduction homogène d'un facteur correspondant à ladite contraction sans subir d'autre modification.

Dans l'exemple montré sur la figure 3 et intégrant cette dernière disposition, il a été réalisé trois encoches 12, 13, 14 dans le support 11 de la décalcomanie 10 comportant un motif représentant une flèche 15, chaque encoche en forme de V débouchant sur l'un des bords 16, 17, 18 dudit support. Ainsi, il est aisé de placer la décalcomanie dans la bonne position car les éléments de relief sont prévus pour coopérer avec les bords des encoches au moment de la mise en place de décalcomanie sans toutefois bloquer les déformations de retrait thermique du support de la décalcomanie pendant le thermo-transfert.

En outre, la disposition des encoches a été déterminée de manière qu'il n'y ait qu'une seule position possible de la décalcomanie 10 sur une surface extérieure d'un pneumatique comportant trois éléments de relief répartis selon une disposition analogue. Pour cela, deux encoches 12 et 13 sont disposées sur deux bords 16, 17 opposés du support 11 et à mi largeur desdits bords tandis que la troisième encoche 14 est réalisée sur un troisième bord 18 du support 11 et de façon à être décalée par rapport à l'axe médian YY' du support mené perpendiculairement à ce même bord.

## Revendications

1. Procédé d'obtention d'un objet en caoutchouc comportant au moins un motif coloré déposé par thermo-transfert à partir d'une décalcomanie (1) sur une surface (7) dudit objet moulé et vulcanisé, le procédé étant caractérisé en ce qu'il comprend les étapes suivantes :
- on moule et on vulcanise ledit objet de façon que sa surface (7), à l'endroit où doit être fixé le motif coloré, présente au moins un élément de relief (8) faisant légèrement saillie sur ladite surface (7),
- on réalise, de manière connue en soi, une décalcomanie (1) par le dépôt sur un support (2) mince d'au moins une encre (3) colorée et vulcanisable selon le motif prédéterminé,
- on réalise, dans le support (2) de la décalcomanie (1), des découpes (5), en nombre au moins égal au nombre d'éléments de relief (8) sur l'objet, lesdites découpes (5) étant adaptées à la géométrie et à la disposition des éléments de relief (8),
- on place la décalcomanie (1) sur l'objet de telle manière que les éléments de relief (8) à la surface (7) de l'objet s'emboîtent dans les découpes (5) du support (2) de la décalcomanie (1) de façon à maintenir la décalcomanie (1) dans la bonne position avant la phase de pressage et de transfert du motif sur l'objet,
- on procède au thermo-transfert de l'encre (3) sur l'objet.

2. Procédé d'obtention selon la revendication 1 caractérisé en ce que l'objet est un pneumatique (6) moulé et vulcanisé comportant à la surface (7) extérieure d'au moins un de ses flancs les éléments de relief (8) disposés de manière à venir s'emboîter dans les découpes (5) réalisées dans le support (2) de la décalcomanie (1) avant de réaliser le transfert du motif encré sur ladite surface (7), lesdits éléments de relief (8) ayant été réalisés pendant le moulage dudit pneumatique (6).

3. Décalcomanie (1) destinée à être appliquée contre la surface (7) d'un pneumatique (6) en caoutchouc vulcanisé, ladite décalcomanie (1) comportant une feuille mince comme support temporaire (2) en matériau adapté pour recevoir des encres de couleur (3) vulcanisables à chaud et formulées pour adhérer davantage au caoutchouc vulcanisé qu'au support après vulcanisation desdites encres et au moins un motif coloré réalisé avec au moins une desdites encres sur le support (2), ledit support (2) présentant au moins une découpe (5), ladite décalcomanie (1) étant caractérisée en ce que chaque découpe (5) a une forme adaptée pour permettre l'emboîtage d'au moins un élément en relief (8) faisant saillie sur la surface (7) du pneumatique (6) à l'emplacement choisi pour placer le motif coloré, de façon que les bords de la (ou des) découpe(s) (5) soient en contact au moins partiellement avec les parois latérales des éléments de relief (8) de manière à limiter les possibilités de mouvement de la décalcomanie (1) par rapport à la surface du pneumatique.

4. Décalcomanie (1) selon la revendication 3 caractérisée en ce que la feuille formant le support (2) est réalisée dans un matériau ayant une température de moulage comprise entre 100°C et 250°C.

5. Décalcomanie (1) selon l'une des revendications 3 à 4 caractérisée en ce que la feuille formant le support (2) est en acétate de cellulose.

6. Décalcomanie (1) selon l'une des revendications 3 à 5 caractérisée en ce que la feuille formant le support (2) comporte au moins deux découpes réalisées sous la forme de lumières dans lesquelles viennent s'emboîter les éléments de relief, les lumières ayant des aires supérieures aux aires des sections transversales des éléments de relief pour permettre au support (2) de se déformer sous l'effet de la température pendant le thermo-transfert du motif sans être bloqué par les éléments de relief dans cette phase.

7. Décalcomanie (1) selon l'une des revendications 3 à 5 caractérisée en ce que les découpes sont réalisées sous la forme d'encoches (12, 13, 14) s'ouvrant sur les bords de la feuille constituant le support (2) de ladite décalcomanie.

8. Décalcomanie (1) selon l'une quelconque des revendications 3 à 7 caractérisée en ce que la disposition des découpes dans le support est telle qu'il n'existe qu'une seule possibilité de placer la décalcomanie sur la surface (7) du pneumatique (6) à décorer, tous les éléments de relief (8) sur ladite surface s'emboîtant dans lesdites découpes.

9. Pneumatique (6) comportant un motif coloré obtenu par thermo-transfert, sur la surface (7) extérieure du pneumatique (6) moulé et vulcanisé, d'un motif initialement réalisé sur le support (2) d'une décalcomanie (1), caractérisé en ce qu'il comporte sur ladite surface (7) des éléments en relief (8) destinés à s'emboîter dans des découpes (5) réalisées dans le support (2) de la décalcomanie (1), le transfert du motif coloré étant obtenu au moyen d'un procédé défini selon la revendication 1 ou la revendication 2.

## Patentansprüche

1. Verfahren zur Herstellung eines Gegenstands aus Kautschuk, der mindestens ein farbiges Motiv aufweist, das durch Wärmeübertragung ausgehend von einem Abziehbild (1) auf eine Fläche (7) dieses geformten und vulkanisierten Gegenstands aufgebracht wird, wobei das Verfahren dadurch gekennzeichnet ist, daß es die folgenden Schritte aufweist:
- man formt und vulkanisiert diesen Gegenstand derart, daß sich an seiner Oberfläche (7) an der Stelle, an der das farbige Motiv aufgebracht werden soll, mindestens ein Reliefelement (8) befindet, das leicht auf dieser Oberfläche (7) vorsteht,
- man stellt in an sich bekannter Weise durch Aufbringen mindestens einer farbigen und vulkanisierbaren Tinte (3) gemäß dem vorbestimmten Motiv auf einen dünnen Träger (2) ein Abziehbild (1) her,
- man stellt im Träger (2) des Abziehbilds (1) Ausschnitte (5) in einer Anzahl mindestens gleich der Anzahl von Reliefelementen (8) auf dem Gegenstand her, wobei diese Ausschnitte (5) an die Geometrie und an die Anordnung der Reliefelemente (8) angepaßt sind,
- man legt das Abziehbild (1) so auf den Gegenstand, daß die Reliefelemente (8) an der Oberfläche (7) des Gegenstands sich in die Ausschnitte (5) des Trägers (2) des Abziehbilds (1) einfügen, so daß das Abziehbild (1) vor der Phase der Druckausübung und der Übertragung des Motivs auf den Gegenstand in der richtigen Stellung gehalten wird,
- man führt die Wärmeübertragung der Tinte (3) auf den Gegenstand durch.

2. Herstellungsverfahren nach Anspruch 1, dadurch gekennzeichnet, daß der Gegenstand ein geformter und vulkanisierter Luftreifen (6) ist, der an der Außenfläche (7) mindestens eines seiner Flanken die Reliefelemente (8) aufweist, die so angeordnet sind, daß sie sich in die im Träger (2) des Abziehbilds (1) hergestellten Ausschnitte (5) einfügen, ehe die Übertragung des Tintenmotivs auf die Oberfläche (7) durchgeführt wird, wobei die Reliefelemente (8) während des Formens des Luftreifens (6) erzeugt wurden.

3. Abziehbild (1), das auf die Oberfläche (7) eines Luftreifens (6) aus vulkanisiertem Kautschuk aufgebracht werden soll, wobei dieses Abziehbild (1) als vorübergehenden Träger (2) eine dünne Folie aus einem Material aufweist, das heißvulkanisierbare farbige Tinten (3) aufnehmen kann, deren solchen Formel so ist, daß sie nach ihrer Vulkanisierung stärker am vulkanisierten Kautschuk als am Träger haften, und mindestens ein farbiges Motiv aufweist, das mit mindestens einer dieser Tinten auf dem Träger (2) hergestellt wurde, wobei der Träger (2) mindestens einen Ausschnitt (5) aufweist, dadurch gekennzeichnet, daß jeder Ausschnitt (5) eine geeignete Form aufweist, um das Einfügen mindestens eines Reliefelements (8) zu erlauben, das auf der Oberfläche (7) des Luftreifens (6) an der für die Anordnung des farbigen Motivs vorgesehenen Stelle vorsteht, so daß die Ränder des Ausschnitts oder der Ausschnitte (5) zumindest teilweise mit den Seitenwänden der Reliefelemente (8) in Kontakt stehen, um die Möglichkeiten der Verschiebung des Abziehbilds (1) in Bezug auf die Oberfläche des Luftreifens zu begrenzen.

4. Abziehbild nach Anspruch 3, dadurch gekennzeichnet, daß die den Träger (2) bildende Folie aus einem Material hergestellt ist, dessen Formtemperatur zwischen 100°C und 250°C liegt.

5. Abziehbild nach einem der Ansprüche 3 bis 4, dadurch gekennzeichnet, daß die den Träger (2) bildende Folie aus Celluloseacetat ist.

6. Abziehbild (1) nach einem der Ansprüche 3 bis 5, dadurch gekennzeichnet, daß die den Träger (2) bildende Folie mindestens zwei Ausschnitte aufweist, die in Form von Schlitzen hergestellt werden, in die sich die Reliefelemente einfügen, wobei die Schlitze Grundflächen aufweisen, die größer sind als die Grundflächen der Querschnitte der Reliefelemente, um es dem Träger (2) zu ermöglichen, sich während der Wärmeübertragung des Motivs unter der Wirkung der Temperatur zu verformen, ohne in dieser Phase durch die Reliefelemente blokkiert zu werden.

7. Abziehbild (1) nach einem der Ansprüche 3 bis 5, dadurch gekennzeichnet, daß die Ausschnitte in Form von Kerben (12, 13, 14) hergestellt werden, die sich an den Rändern der Folie öffnen, die den Träger (2) des Abziehbilds bildet.

8. Abziehbild (1) nach einem beliebigen der Ansprüche 3 bis 7, dadurch gekennzeichnet, daß die Anordnung der Ausschnitte im Träger so ist, daß es nur eine einzige Möglichkeit gibt, um das Abziehbild auf der Oberfläche (7) des zu verzierenden Luftreifens (6) zu positionieren, wobei alle Reliefelemente (8) auf dieser Oberfläche sich in diese Ausschnitte einfügen.

9. Luftreifen (6) mit einem farbigen Motiv, das durch Wärmeübertragung eines ursprünglich auf dem Träger (2) eines Abziehbilds (1) hergestellten Motivs auf die Außenfläche (7) des geformten und vulkanisierten Luftreifens (6) erhalten wird, dadurch gekennzeichnet, daß er auf dieser Oberfläche (7) Reliefelemente (8) aufweist, die sich in Ausschnitte (5) im Träger (2) des Abziehbilds (1) einfügen, wobei die Übertragung des farbigen Motivs mittels eines in Anspruch 1 oder Anspruch 2 definierten Verfahrens erhalten wird.

## Claims

1. A process for obtaining a rubber article having at least one coloured motif deposited by thermal transfer from a decal (1) on a surface (7) of said moulded vulcanised article, the process being characterised in that it comprises the following steps:
-- said article is moulded and vulcanised in such a manner that on its surface (7), at the place where the coloured motif is to be fixed, there is at least one element in relief (8) which protrudes slightly from said surface (7);
-- a decal (1) is provided, in a manner known per se, by depositing at least one vulcanisable coloured ink (3) in accordance with the predetermined motif on a thin backing (2),
-- a number of cutouts (5) at least equal to the number of elements in relief (8) on the article are made in the backing (2) for the decal (1), said cutouts (5) being adapted to the geometry and the arrangement of the elements in relief (8),
-- the decal (1) is placed on the article in such a manner that the elements in relief (8) on the surface (7) of the article are introduced into the cutouts (5) of the backing (2) of the decal (1) so as to hold the decal (1) in its proper position before the phase of pressing and transferring the motif onto the article,
-- finally, the thermal transfer of the ink (3) to the article (3) is effected.

2. A process in accordance with Claim 1, characterised in that the article is a vulcanised moulded tyre (6) having on the outer surface (7) of at least one of its sidewalls elements in relief (8) arranged in such a manner as to fit into the cutouts (5) made in the backing (2) of the decal (1) before effecting the transfer of the inked motif onto said surface (7), said elements in relief (8) having been made during the moulding of said tyre (6).

3. A decal (1) to be applied on the surface (7) of a vulcanised rubber tyre (6), said decal (1) comprising a thin sheet as temporary backing (2) of a material adapted to receive heat-vulcanisable coloured inks (3) formulated to adhere more to the vulcanised rubber than to the backing after vulcanisation of said inks and at least one coloured motif made with at least one of said inks on the backing (2), said backing (2) having at least one cutout (5), said decal (1) being characterised in that each cutout (5) has a shape adapted to permit the fitting therein of at least one element in relief (8) protruding from the surface (7) of the tyre (6) at the place selected for the placing on of the coloured motif, in such a manner that the edges of the cutout or cutouts (5) are in contact at least in part with the side walls of the elements in relief (8) so as to limit the possibilities of movement of the decal (1) with respect to the surface of the tyre.

4. A decal (1) according to Claim 3, characterised in that the sheet forming the backing (2) is made of a material having a moulding temperature of between 100°C and 250°C.

5. A decal (1) according to one of Claims 3 to 4, characterised in that the sheet forming the backing (2) is cellulose acetate.

6. A decal (1) according to one of Claims 3 to 5, characterised in that the sheet forming the backing (2) includes at least two cutouts made in the form of openings into which the elements in relief fit, the openings having areas greater than the cross-sectional areas of the elements in relief in order to permit the backing (2) to deform under the effect of the temperature during the thermal transfer of the motif without being blocked by the elements in relief in this phase.

7. A decal (1) according to one of Claims 3 to 5, characterised in that the cutouts are made in the form of notches (12, 13, 14) opening onto the edges of the sheet constituting the backing (2) of said decal.

8. A decal (1) according to any one of Claims 3 to 7, characterised in that the arrangement of the cutouts in the backing is such that there is only a single possibility for placing the decal on the surface (7) of the tyre (6) to be decorated, all the elements in relief (8) on said surface fitting in said cutouts.

9. A tyre (6) having a coloured motif obtained by thermal transfer on the outer surface (7) of the vulcanised, moulded tyre (6) of a motif initially made on the backing (2) of a decal (1), characterised in that it comprises on said surface (7) elements in relief (8) intended to fit into cutouts (5) made in the backing (2) of the decal (1), the transfer of the coloured motif being obtained by means of a process defined in Claim 1 or Claim 2.
